# EUROPEAN PATENT SPECIFICATION

(11) **EP 0 893 038 B1**
(45) Date of publication and mention of the grant of the patent: **27.06.2001**
(21) Application number: 97916522.2
(22) Date of filing: 09.04.1997
(51) Int. Cl.: H05B 3/82, H05B 1/02, A47J 27/21

(54) **IMPROVEMENTS RELATING TO ELECTRICALLY POWERED LIQUID HEATING APPLIANCES AND CONTROLS THEREFOR**
VERBESSERTES ELEKTRISCHES HEIZGERÄT FÜR FLUSSIGKEITEN UND STEUERUNG DAFÜR
PERFECTIONNEMENTS RELATIFS A DES APPAREILS MENAGERS ELECTRIQUES DE CHAUFFAGE DE LIQUIDES ET A LEURS ORGANES DE COMMANDE

(30) Priority: 10.04.1996 GB 9607413
(43) Date of publication of application: 27.01.1999
(73) Proprietor: OTTER CONTROLS LIMITED, Buxton, Derbyshire SK17 6LA (GB)
(72) Inventor: BROOK, Stephen, Roger, Buxton, Derbyshire SK17 6XU (GB); JOHN, Kevin, Edwin, Buxton, Derbyshire SK17 6AW (GB); WHITE, Ian, Geoffrey, Buxton, Derbyshire SK17 7ER (GB); HADFIELD, Robert, Henry, Marple, Cheshire SK6 6DF (GB); O'NEILL, Robert, Andrew, Buxton, Derbyshire SK17 9NQ (GB)
(74) Representative: Milhench, Howard Leslie
(86) International application number: GB9700984
(87) International publication number: WO9738557

(56) References cited:
- WO-A-94/18807
- DE-A- 4 403 638
- GB-A- 2 283 156

## Description

### Field of the Invention:

This invention concerns improvements relating to electrically powered liquid heating appliances and controls therefor. The invention may be applied to liquid heating appliances such as electric kettles, hot water jugs, urns, pans, laboratory equipment etc., and will be described in the following with particular reference to electric kettles and hot water jugs, though it is to be well understood that the invention is not limited to such appliances.

### Background of the Invention:

In our British patent application GB-A-2 306 801 filed on 3 November 1995 there are described a number of different ways of mounting an element overtemperature protector and a cordless connector system to a planar heating element of a liquid heating vessel, and suitable element overtemperature protector devices and cordless connector systems are also described. As is well known an element overtemperature protector is a device which is adapted to sense the occurrence in the heating element of an electric water heating appliance or the like of an overtemperature condition and to switch-off the supply of power to the element. Cordless connection systems are employed with so-called cordless electrical appliances in which power is supplied to the appliance proper through a base unit connected to the mains supply, the appliance proper and the base unit having complementary parts of an electrical connector system adapted to mate for the supply of power through the base unit to the appliance proper when the latter is set down upon the base unit. The invention of British patent application GB-A-2 306 801 abovementioned is particularly concerned with tolerance problems which can arise in the fitting of protective and connector devices to water heating appliances in the course of their manufacture.

Our British patent application GB-A 2 307 602 filed 27 November 1995 describes the use of a mounting bracket to attach an element overtemperature protector and one part of a cordless connector system to the underside of a planar heating element, the described arrangement serving furthermore for mounting -the planar heating element in a liquid heating vessel. More particularly, in the described arrangement one or more mounting brackets are secured to respective studs welded to or integrally formed on the underside of the heating element, the mounting bracket(s) being formed to provide additional mountings firstly for an element overtemperature protection control and secondly for the vessel-mounted part of the cordless connector system. The bracket(s) serve(s) furthermore for the mounting of a bottom cover of the vessel in such a manner that the fixing of the bottom cover of the vessel causes the planar heating element to be drawn into the open bottom of the vessel and to seal against a flange provided in the bottom of the vessel. Other examples of planar electric heating elements can be found in WO-A-9 418 807 and GB-A-2 283 156.

The present invention concerns further developments that we have made in relation to the attachment of element overtemperature protector devices and/or cordless connector parts to planar heating elements in electrically powered water heating vessels.

### Brief Summary of the Invention:

The features of the present invention are as set forth in the appended claims.

According to an embodiment of the present invention, the bracket and stud mounting arrangement described in British patent application GB-A 2 307 602 is modified to provide redundant mounting facilities useful in the event (however unlikely) that an element overtemperature protection device and/or cordless connector system part affixed to the element proves to be faulty or fails in use. For example, in the case where post-like mounting studs are provided on the underside of the heating element to be received in apertures provided in the mounting bracket(s), the present invention proposes to at least duplicate such mounting studs and apertures so that, in the event of failure of a device attached by the bracket(s) and studs to the element, the failed device can be removed by machining off the already utilized studs and there will be other intact studs available for the fitting of a replacement device.

In its simplest form, wherever the invention of British patent application GB-A-2 307 602 provided a mounting stud on the element and an aperture in the mounting bracket(s), the present invention provides a pair of such mounting studs and a pair of apertures in the mounting bracket(s). Instead of a pair of apertures in the mounting bracket(s), there could instead be an elongate aperture serving the same purpose. Instead of having plural post-like studs depending from the underside of the heating element, a laterally elongate formation could be provided to the same effect, such formation being adapted to be received in a complementary slot in the mounting bracket and enabling riveting of the bracket to the underside of the element by deformation of the formation selectively at a plurality of different locations along its length.

Further features of the present invention are set forth in the appended claims and, together with the advantages thereof, will become fully apparent from consideration of the following detailed description given with reference to the accompanying drawings.

### Description of the Drawings:

Figures 1A, 1B and 1C show, respectively, a plan view of the underside of an exemplary form of planar heating element, a view similar to Fig 1A but with the addition of an element overtemperature protection control in position to be affixed to the element by use of a fixing bracket, and a perspective view of the arrangement of Fig 1B;
Figures 2B and 2C show, respectively, a view similar to Fig 1B showing the addition of part of a cordless connector system to the heater element and element overtemperature protection control, and a view similar to 1B showing a perspective view of the arrangement of Fig 2A;
Figures 3A, 3B and 3C show, respectively, a plan view of the underside of an alternative exemplary form of planar heating element, a view similar to Fig 3A but with the addition of an element overtemperature protection control and a part of a cordless connector system, and a perspective view of the arrangement of Fig 3B;
Figures 4A, 4B, 4C and 4D show in top plan, side elevation, end elevation and enlarged perspective views a first exemplary mounting bracket for use in mounting an element overtemperature protection control and a cordless connector system part to a planar heating element;
Figures 5A, 5B, 5C and 5D are views similar to those of Figs 4A-4D showing a second exemplary mounting bracket for use in mounting just an element overtemperature protection control to a planar heating element;
Figures 6A, 6B, 6C and 6D are views similar to those of Figs 4A-4D showing a third exemplary mounting bracket for use in mounting an element overtemperature protection control and a cordless connector system part to a planar heating element; and
Figures 7A, 7B, 7C and 7D are views similar to those of Figs 5A-5D showing a fourth exemplary mounting bracket for use in mounting just an element overtemperature protection control to a planar heating element.

### Detailed Description of the Embodiments:

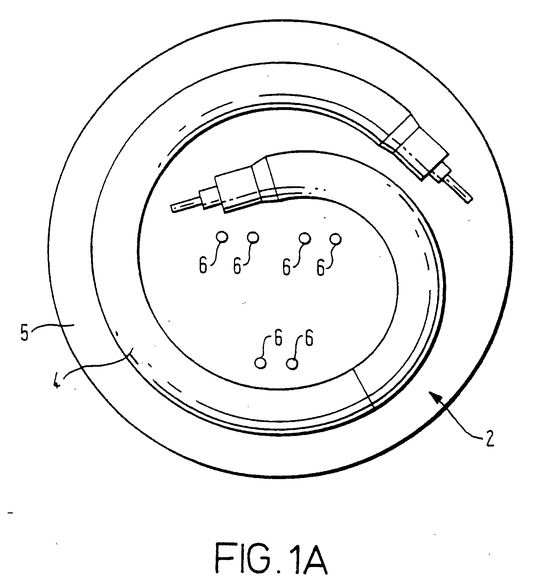

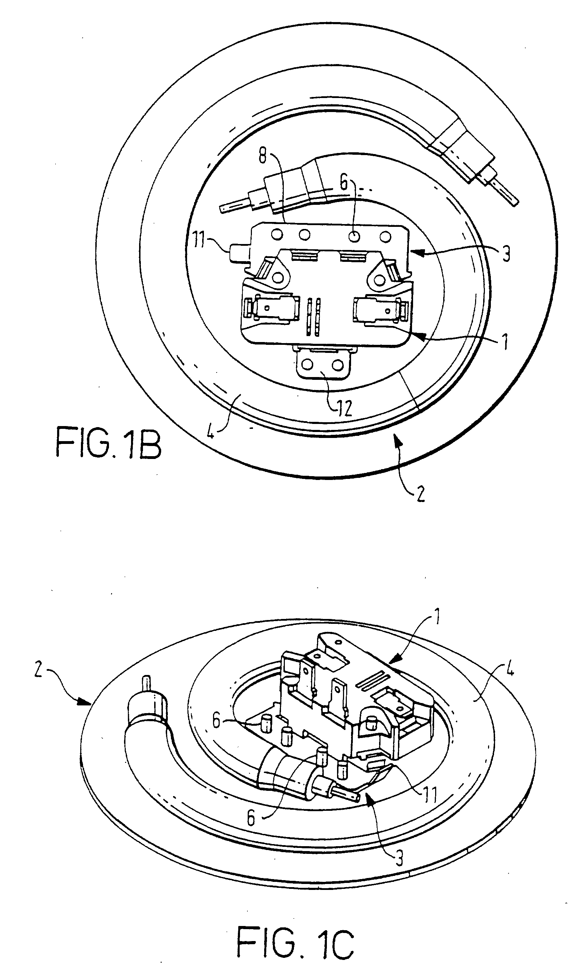

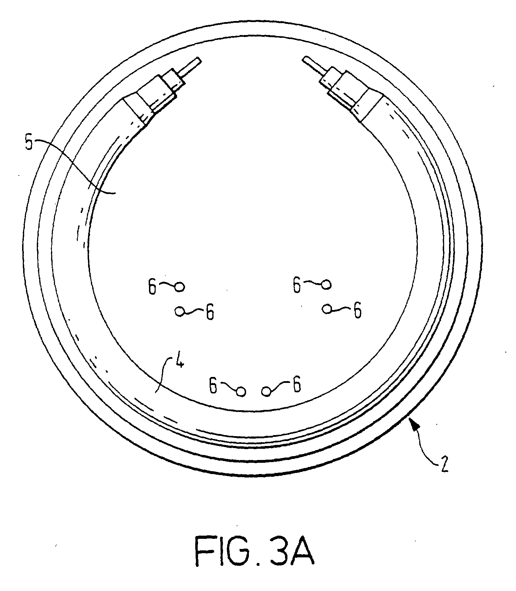

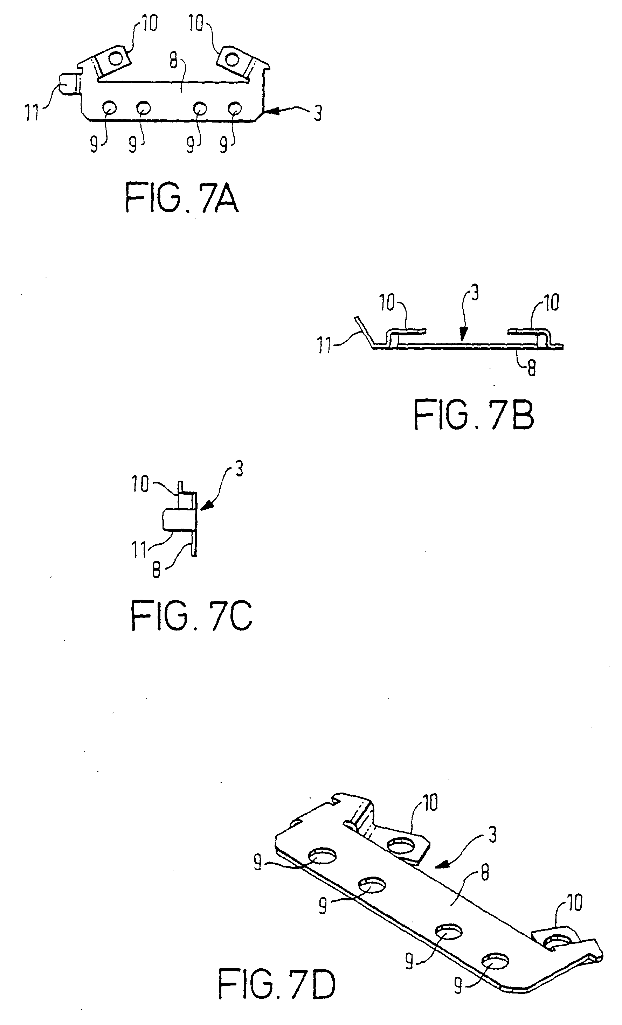

Referring first to Figs 1A-1C, shown therein is an exemplary arrangement for mounting an element overtemperature protection control 1 to the underside of a planar electrical heating element 2 by means of a mounting bracket 3. The control 1 is an X2 control manufactured by ourselves and is a modified form of the control that is described in GB-A-2194099 with reference to Figs 3A-3C thereof. The planar heating element 2 is based upon a conventional Bleckmann element and comprises a heating element proper 4 clenched to an aluminium plate 5. The mounting bracket 3 is shown in more detail in Figs 7A-7D.

As shown in Figs 1A-1C, the heating element base plate 5 is formed with six post-like irreversibly deformable mounting studs 6 depending from the undersurface thereof. The mounting bracket 3 comprises an elongate flat metal base 8 having holes 9 formed therein for receiving the-upper row of four in-line mounting studs 6, and formed with mounting limbs 10 extending from and elevated above the base 8 for attachment to the element overtemperature protection control 1 and with an earth or ground connection tab terminal 11.

Assembly of the illustrated arrangement is effected by first securing the limbs 10 of the bracket 3 to the element overtemperature control 1 by rivetting so as to form a sub-assembly which is then offered up to the underside of the heating element. The four holes 9 in the base 8 of the mounting bracket register with the upper row of the four posts 6 that depend from the undersurface of the heating element 2, and the other two posts 6 register with corresponding holes in a fixing bracket 12 formed as an integral part of the control 1. Two of the four in-line posts 6 can then be peened so as to deform and effectively rivet the mounting bracket 3 to the underside of the heating element, and similarly with one of the other two posts so as to secure the other side of the control 1. In the event (however unlikely) that the control 1 is found to be defective or fails in use, the already utilized posts 6 can be machined off so as to enable the control to be replaced, and three intact posts will still be available for attachment of the replacement control at the same location.

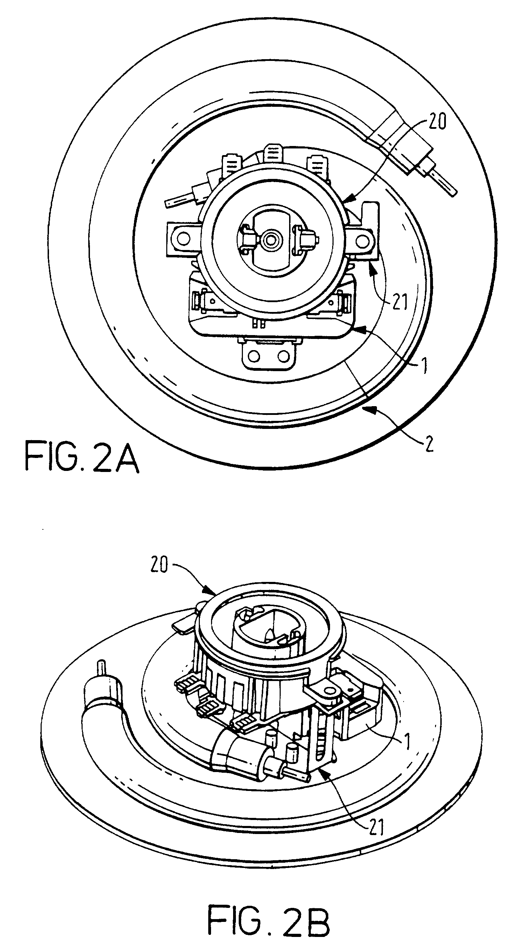

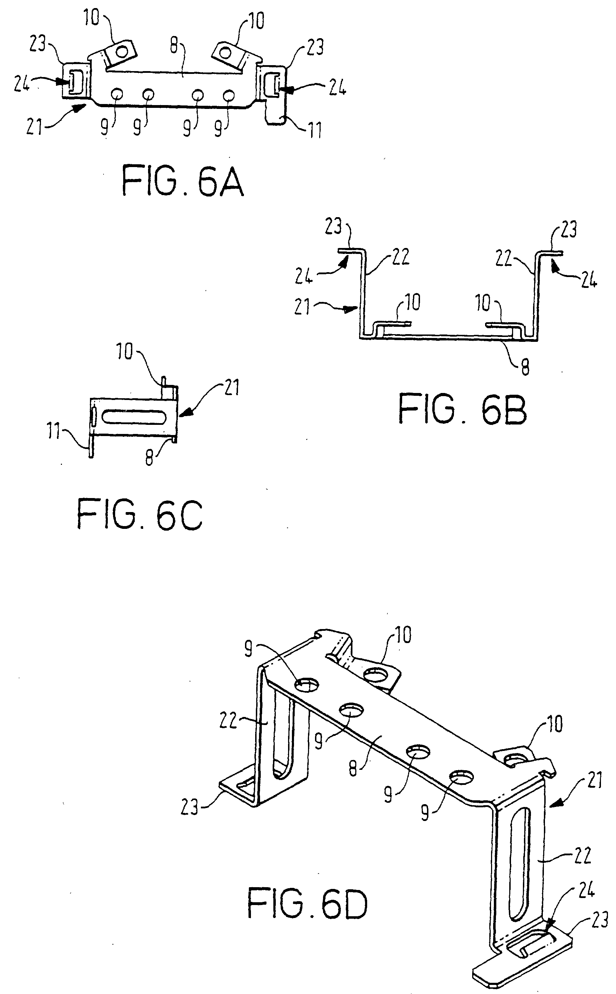

Referring now to Figures 2A and 2B, these show an arrangement wherein an element overtemperature protection control 1 substantially as abovedescribed is affixed to a planar heating element 2 as abovedescribed with reference to Figure 1A in combination with a cordless connector system part 20, a bracket 21 as shown in Figures 6A-6D being utilized. The cordless connector system part 20 is described in British patent application GB-A-2 306 801 aforementioned and is manufactured and marketed by us as the CP7 cordless appliance connector inlet; this cordless connector system advantageously provides for connection between a cordless appliance proper and its base within any rotational relative orientation of the appliance proper and its base and is the subject of our British patent application no. 9504233.9 (GB-A-2285716).

The bracket 21 of Figures 6A-6D has a base part 8 with holes 9 and offset limbs 10 just as in the mounting bracket 3 of Figures 7A-7D, and these perform the same functions as they perform in the mounting bracket 3. In addition, the bracket 21 has long legs 22 which extend from the ends of the base 8 and terminate in mounting feet 23 which, as can be seen from Figure 2B, serve for mounting the cordless connector system part 20 above (as viewed) the element overtemperature protection control 1. The legs 22 are slotted as shown so as to enhance their flexibility and the feet 23 have elongated spire nut formations 24 providing for lateral adjustability of the mounting of the connector part 20. The flexibility of the legs 22, coupled with the adjustability of the spire nut formations 24 provides compliance in three dimensional space of the mounting position of the connector part 20 which enables appliance manufacturing tolerances easily to be accommodated.

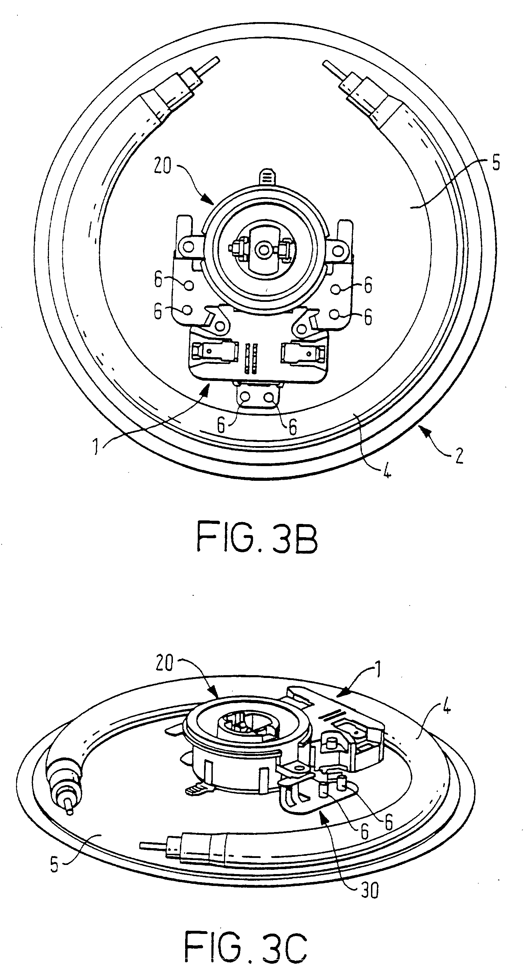

Figures 3A, 3B and 3C show an alternative arrangement to that of Figures 2A and 2B wherein the element overtemperature protection control 1 and the cordless connector system part 20 are mounted in side-by-side relation rather than one above the other. This is enabled by virtue of the heating element proper 4 being disposed more about the periphery of the element plate 5, as shown in Figure 3A, than it is in the heating element of Figure 1A, this arrangement freeing up more space centrally of the element plate 5 and enabling the side-by-side arrangement of control 1 and connector part 20 to be accommodated. Not only are the control 1 and connector part 20 mounted side-by-side, also in the arrangement shown the current carrying terminals of the connector part 20 plug into the control 1 in the manner described in our British patent application GB-A-2 306 801.

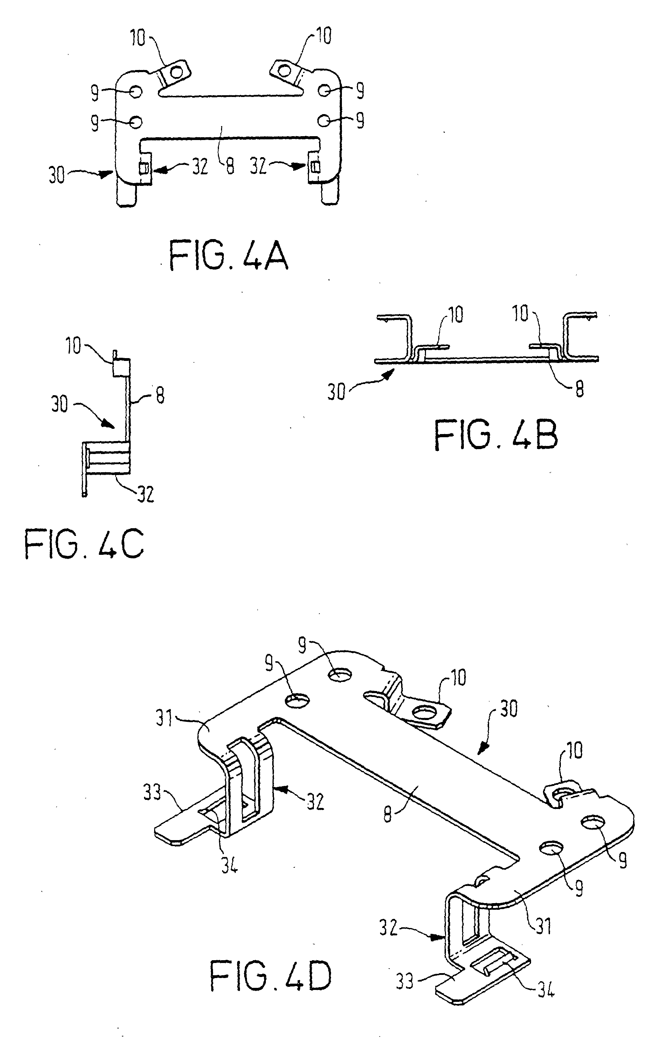

Figure 3A shows the underside of the heating element and it will be seen also that the mounting studs 6 are differently arranged as compared to the heating element of Figure 1A, the arrangement shown ensuring the accessibility of the studs once the sub-assembly of control 1, connector part 20 and mounting bracket 30 has been fitted thereto. The mounting bracket 30 is shown in detail in Figures 4A-4D and, as with the brackets hereinbefore described, comprises a base 8 with mounting holes 9 and, offset therefrom, limbs 10 enabling mounting of the overtemperature protection control 1. The bracket 30 has forward extensions 31 from the ends of base 8 and legs 32 depend from the extensions 31 and terminate in feet 33 provided with elongate spire nut formations 34, the legs 32 being slotted for enhanced flexibility in the manner of the legs 22 of the mounting bracket of Figures 6A-6D. As with the previously described arrangements, the mounting posts provide redundancy so that a failed or ineffective control 1 and/or cordless connector system part 20 can be replaced without having to discard the heating element.

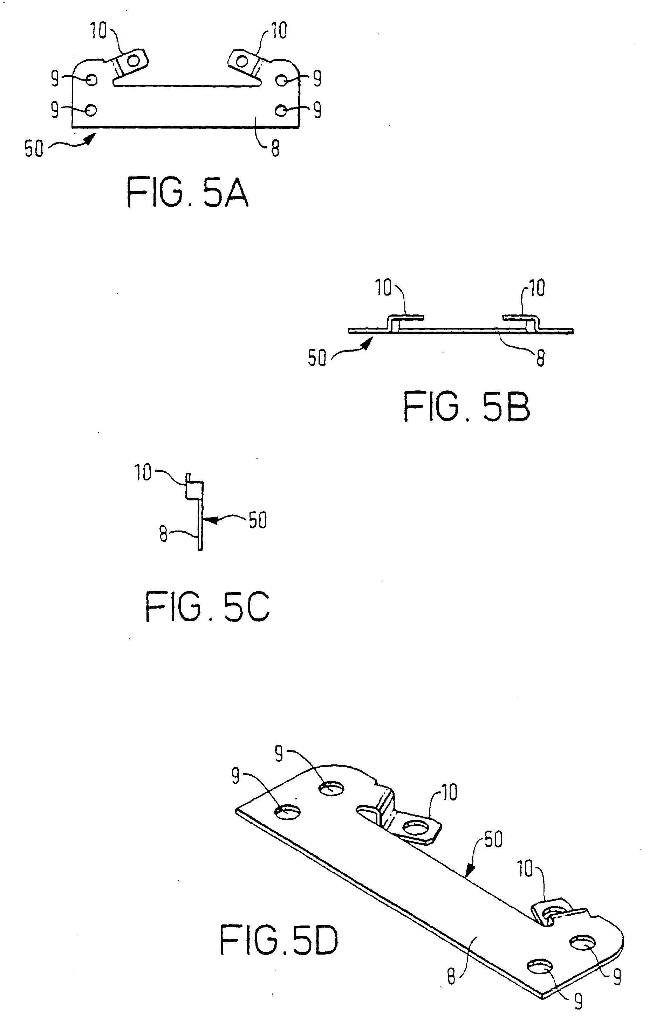

Figures 5A-5D show an alternative mounting bracket 50 adapted for use with the heating element of Figure 3A when only an element overtemperature protection control 1 is required to be fitted.

The arrangements hereinbefore described advantageously enable replacement of an element overtemperature protection control and/or a cordless connector part without the element having to be discarded. As in the arrangement described in our British patent application GB-A-2 307 602, the attachment of an appliance bottom cover can be arranged to pull the planar heating element down into the bottom of the vessel and effect its mounting by virtue of pulling upon the mounting bracket. Alternative ways of securing the heating element could however be utilized. Additionally, where an element overtemperature protection control is used with a cordless connector system part, the arrangement can be such that the control and the connector system part plug into one another as taught in our British patent application GB-A-2 306 801 Alternatively they can be arranged to be interconnected by means of flying leads.

While the invention has been described herein by reference to specific embodiments, it is to be well understood that these are in all respects exemplary and that modifications and variations are possible without departure from the scope of the invention as set forth in the appended claims. Accordingly, the use of a Bleckmann type element is exemplary only and other planar element types could similarly be utilized. Similarly, the element overtemperature protection control could be other than the described X2 control and the cordless connector system part could be other than our CP7 connector. The connector system part could even be an appliance connector inlet for use with a conventional corded appliance which plugs directly into the mains supply; namely, the invention is not limited to cordless appliances.

## Claims

1. A planar electric heating element (2) for an electrically powered liquid heating appliance, said heating element having irreversibly deformable means (6) enabling the attachment to the heating element (2) of an element overtemperature protection control (1) and/or a part (20) of an electrical connection system, and said heating element furthermore being arranged so that such a control (1) and/or connector system part (20) attached to the element may be removed if it becomes inoperative and may be replaced without need to discard the element.

2. A heating element as claimed in claim 1 wherein said irreversibly deformable means (6) comprise formations (6) for use in attaching the control (1) and/or connector system part (20), and additional said irreversibly deformable formations are provided for use in attaching a replacement control and/or connector system part to the element after the inoperative attached control and/or connector system part has been removed.

3. A heating element as claimed in claim 2 wherein said formations (6) comprise studs which are deformable in the manner of a rivet.

4. A heating element as claimed in claim 2 wherein said formations are laterally elongate so as to provide for selective deformation at a plurality of positions.

5. A heating element as claimed in claim 2 or 3 or 4 wherein the formations (6) are an integral part of the planar heating element (2).

6. A heating element as claimed in any of the preceding claims comprising a metal plate (5) having an electrical resistance heating element (4) affixed to one surface thereof.

7. A heating element as claimed in any of the preceding claims in combination with a mounting bracket (3; 21; 30; 50) affixed or adapted to be affixed thereto, said mounting bracket serving for the attachment to the heating element (2) of an element overtemperature protection control (1) and/or a part of an electrical connection system (20) as aforesaid.

8. The combination claimed in claim 7 wherein the mounting bracket (3; 50) has provision only for the mounting of an element overtemperature protection control (1) as aforesaid to the heating element (2).

9. The combination claimed in claim 7 wherein the mounting bracket (21; 30) has provision for the mounting of both an element overtemperature protection control (1) as aforesaid and a part of an electrical connection system (20) as aforesaid to the heating element (2).

10. The combination claimed in claim 9 wherein the mounting bracket (30) is arranged for the mounting of the element overtemperature protection control (1) and the part of the electrical connection system (20) in side-by-side relationship.

11. The combination claimed in claim 9 wherein the mounting bracket (21) is arranged for the mounting of the element overtemperature protection control (1) and the part of the electrical connection system (20) in one-atop-the-other relationship.

12. The combination claimed in claim 10 or 11 wherein the mounting bracket (21; 30) is arranged to provide compliance in the mounting position of at least the part of the electrical connection system (20).

13. The combination claimed in any of claims 7 to 12 further including an element overtemperature protection control (1) as aforesaid.

14. The combination claimed in any of claims 7 to 13 further including a part of an electrical connection system (20) as aforesaid.

15. The combination claimed in claim 14 wherein said part of an electrical connection system (20) is the appliance connector inlet part of a corded electrical connection system.

16. The combination claimed in claim 14 wherein said part of an electrical connection system (20) is the appliance connector inlet part of a cordless electrical connector system.

17. The combination claimed in claim 16 wherein said cordless electrical connector system is arranged to enable the powering of the heating element through the connector system substantially irrespective of the relative rotational orientation of the two parts of the cordless electrical connector system.

18. An electrically powered liquid heating appliance having fitted therein a heating element as claimed in any of claims 1 to 6 or the combination claimed in any of claims 7 to 17.

19. An appliance as claimed in claim 13 wherein the attachment of a bottom cover to the appliance serves to fix the heating element (2) in the appliance.

20. An appliance as claimed in claim 19 as dependent upon claim 7 wherein said bottom cover is secured to said bracket or to a component which is secured to said bracket.

## Patentansprüche

1. Planares elektrisches Heizelement (2) für ein elektrisch betriebenes Flüssigkeits-Heizgerät, wobei das Heizelement eine irreversibel deformierbare Einrichtung (6) aufweist, die die Anbringung einer Element-Übertemperatur-Schutzsteuerung (1) und/oder einer Einheit (20) eines elektrischen Verbindungssystems am Heizelement (2) erlaubt und wobei das Heizelement außerdem so eingerichtet ist, daß eine solche Steuerung (1) und/oder Verbindungssystemeinheit (20), die am Element angebracht ist, entfernt werden kann, wenn sie funktionsunfähig wird, und ersetzt werden kann, ohne daß das Element weggeworfen werden muß.

2. Heizelement nach Anspruch 1, wobei die irreversibel deformierbare Einrichtung (6) Gestaltungen (6)zur Verwendung bei der Anbringung der Steuerung (1) und/oder Verbindungssystemeinheit (20) aufweist und zusätzliche solche irreversibel deformierbaren Gestaltungen zur Verwendung bei der Anbringung einer Austausch-Steuerung und/oder Verbindungssystemeinheit an dem Element, nachdem die funktionsunfähige angebrachte Steuerung und/oder Verbindungssystemeinheit entfernt worden ist, vorgesehen sind.

3. Heizelement nach Anspruch 2, wobei die Gestaltungen (6) Pfosten umfassen, die nach Art einer Niete deformierbar sind.

4. Heizelement nach Anspruch 2, wobei die Gestaltungen in Querrichtung länglich sind, so daß eine selektive Verformung an mehreren Positionen vorgesehen ist.

5. Heizelement nach Anspruch 2 oder 3 oder 4, wobei die Gestaltungen integraler Teil des planaren Heizelements (2) sind.

6. Heizelement nach einem der vorhergehenden Ansprüche mit einer Metallplatte (5), die ein elektrisches Widerstandsheizelement (4) auf einer ihrer Flächen angebracht hat.

7. Heizelement nach einem der vorhergehenden Ansprüche in Kombination mit einer Befestigungsklammer (3; 21; 30; 50), die daran angebracht ist oder werden kann und zur Anbringung einer Element-Übertemperatur-Schutzsteuerung (1) und/oder Einheit eines elektrischen Verbindungssystems (20) wie oben angegeben an dem Heizelement (2) dient.

8. Kombination nach Anspruch 7, wobei die Befestigungsklammer (3; 50) lediglich Vorkehrungen zur Befestigung einer Element-Übertemperatur-Schutzsteuerung (1) wie oben angegeben an dem Heizelement (2) aufweist.

9. Kombination nach Anspruch 7, wobei die Befestigungsklammer (21; 30) Vorkehrungen zur Befestigung sowohl einer Element-Übertemperatur-Schutzsteuerung (1) wie oben angegeben als auch einer Einheit eines elektrischen Verbindungssystems (20) wie oben angegeben an dem Heizelement (2) aufweist.

10. Kombination nach Anspruch 9, wobei die Befestigungsklammer (30) zur Befestigung der Element-Übertemperatur-Schutzsteuerung (1) und der Einheit des elektrischen Verbindungssystems (20) nebeneinander eingerichtet ist.

11. Kombination nach Anspruch 9, wobei die Befestigungsklammer (21) zur Befestigung der Element-Übertemperatur-Schutzsteuerung (1) und der Einheit des elektrischen Verbindungssystems (20) aufeinander eingerichtet ist.

12. Kombination nach Anspruch 10 oder 11, wobei die Befestigungsklammer (21; 30) eingerichtet ist, für eine Nachgiebigkeit für die Befestigungsposition zumindest des Einheit des elektrischen Verbindungssystems (20) zu sorgen.

13. Kombination nach einem der Ansprüche 7 bis 12 mit einer wie oben angegebenen Element-Übertemperatur-Schutzsteuerung (1).

14. Kombination nach einem der Ansprüche 7 bis 13 mit einer wie oben angegebenen Einheit eines elektrischen Verbindungssystems (20).

15. Kombination nach Anspruch 14, wobei die Einheit des elektrischen Verbindungssystems (20) das Geräteverbinder-Einlaßteil eines mit Schnur versehenen elektrischen Verbindungssystems darstellt.

16. Kombination nach Anspruch 14, wobei die Einheit eines elektrischen Verbindungssystems (20) das Geräteverbinder-Einlaßteil eines schnurlosen elektrischen Verbindungssystems darstellt.

17. Kombination nach Anspruch 16, wobei das schnurlose elektrische Verbindungssystem eingerichtet ist, die Versorgung des Heizelements durch das Verbindungssystem im wesentlichen unabhängig von der relativen Drehorientierung seiner beiden Teile zu bewirken.

18. Elektrisch betriebenes Flüssigkeits-Heizgerät mit einem darin angebrachten Heizelement nach einem der Ansprüche 1 bis 6 oder der Kombination nach einem der Ansprüche 7 bis 17.

19. Elektrisches Gerät nach Anspruch 18, wobei die Anbringung eines Bodendeckels an dem Gerät der Befestigung des Heizelements (2) in dem Gerät dient.

20. Gerät nach Anspruch 19, soweit von Anspruch 7 abhängig, wobei der Bodendeckel an der Klammer oder an einer an der Klammer befestigten Komponente befestigt ist.

## Revendications

1. Elément de chauffage électrique plan (2) pour un appareil ménager électrique de chauffage de liquide, ledit élément de chauffage ayant des moyens (6) déformables de manière irréversible permettant la fixation à l'élément de chauffage (2) d'une commande (1) de protection contre la surchauffe de l'élément et/ou d'une partie (20) d'un système de connexion électrique, ledit élément de chauffage étant agencé par ailleurs de telle sorte que cette commande (1) et/ou cette partie (20) du système de connexion fixées à l'élément puissent être retirées si elles deviennent inopérantes et puissent être remplacées sans devoir mettre l'élément au rebut.

2. Elément de chauffage selon la revendication 1, dans lequel lesdits moyens (6) déformables de manière irréversible comprennent des saillies (6) susceptibles d'être utilisées pour fixer la commande (1) et/ou la partie (20) du système de connexion et, en outre, lesdites saillies déformables de manière irréversible sont destinées à être utilisées pour fixer une commande de substitution et/ou une partie de substitution du système de connexion à l'élément, après que la commande et/ou la partie du système de connexion fixées et inopérantes ont été retirées.

3. Elément de chauffage selon la revendication 2, dans lequel lesdites saillies (6) comprennent des goujons qui sont déformables à la manière d'un rivet.

4. Elément de chauffage selon la revendication 2, dans lequel lesdites saillies sont allongées latéralement de manière à assurer une déformation sélective dans une pluralité de positions.

5. Elément de chauffage selon la revendication 2 ou 3 ou 4, dans lequel les saillies (6) font partie intégrante de l'élément de chauffage plan (2).

6. Elément de chauffage selon l'une quelconque des revendications précédentes, comprenant une plaque de métal (5) ayant un élément de chauffage à résistance électrique (4) fixé à une de ses surfaces.

7. Elément de chauffage selon l'une quelconque des revendications précédentes en combinaison avec un support de montage (3, 21; 30; 50) fixé ou susceptible d'être fixé à l'élément, ledit support de montage servant à la fixation à l'élément de chauffage (2) d'une commande (1) de protection contre la surchauffe de l'élément et/ou d'une partie d'un système de connexion électrique (20), comme précitées.

8. Combinaison selon la revendication 7, dans laquelle le support de montage (3; 50) n'est destiné qu'au montage d'une commande (1) de protection contre la surchauffe de l'élément comme précitée sur l'élément de chauffage (2).

9. Combinaison selon la revendication 7, dans laquelle le support de montage (21; 30) est destiné au montage à la fois d'une commande (1) de protection contre la surchauffe de l'élément comme précité et/ou d'une partie d'un système de connexion électrique (20) comme précitée sur l'élément de chauffage (2).

10. Combinaison selon la revendication 9, dans laquelle le support de montage (30) est agencé pour le montage de la commande (1) de protection contre la surchauffe de l'élément et la partie du système de connexion électrique (20) en relation côte à côte.

11. Combinaison selon la revendication 9, dans laquelle le support de montage (21) est agencé pour le montage de la commande (1) de protection contre la surchauffe de l'élément et la partie du système de connexion électrique (20) en relation l'un au-dessus de l'autre.

12. Combinaison selon la revendication 10 ou 11, dans laquelle le support de montage (21; 30) est agencé pour conformer dans la position de montage d'au moins la partie du système de connexion électrique (20).

13. Combinaison selon l'une quelconque des revendications 7 à 12, comprenant par ailleurs une commande (1) de protection contre la surchauffe de l'élément comme précitée.

14. Combinaison selon l'une quelconque des revendications 7 à 13, comprenant en outre une partie d'un système de connexion électrique (20) comme précitée.

15. Combinaison selon la revendication 14, dans laquelle ladite partie d'un système de connexion électrique (20) est la partie d'entrée du connecteur d'un appareil ménager pour un système de connexion électrique à fil.

16. Combinaison selon la revendication 14, dans laquelle ladite partie d'un système de connexion électrique (20) est la partie d'entrée du connecteur d'un appareil ménager pour un système de connexion électrique sans fil.

17. Combinaison selon la revendication 16, dans laquelle ledit système de connexion électrique sans fil est agencé pour permettre l'alimentation énergétique de l'élément de chauffage par l'intermédiaire du système de connecteur sensiblement quelle que soit l'orientation relative en rotation des deux parties du système de connecteur électrique sans fil.

18. Appareil ménager électrique de chauffage de liquide, dans lequel est ajusté un élément de chauffage selon l'une quelconque des revendications 1 à 6 ou une combinaison selon l'une quelconque des revendications 7 à 17.

19. Appareil ménager selon la revendication 18, dans lequel la fixation d'un couvercle inférieur à l'appareil ménager sert à fixer l'élément de chauffage (2) dans l'appareil ménager.

20. Appareil ménager selon la revendication 19, dans la mesure où elle dépend de la revendication 7, dans lequel ledit couvercle inférieur est fixé audit support ou à un composant qui est fixé audit support.
